# EUROPEAN PATENT SPECIFICATION

(11) **EP 3 358 130 B1**
(45) Date of publication and mention of the grant of the patent: **03.05.2023**
(21) Application number: 18154678.9
(22) Date of filing: 01.02.2018
(51) Int. Cl.: E21B 43/12, F04D 13/06, E21B 43/01

(54) **MOTOR PROTECTOR OF AN ELECTRIC SUBMERSIBLE PUMP AND AN ASSOCIATED METHOD THEREOF**
MOTORSCHUTZ EINER ELEKTRISCHEN TAUCHPUMPE UND ZUGEHÖRIGES VERFAHREN
PROTECTEUR DE MOTEUR D'UNE POMPE SUBMERSIBLE ÉLECTRIQUE ET SON PROCÉDÉ ASSOCIÉ

(30) Priority: 01.02.2017 US 201715421843
(43) Date of publication of application: 08.08.2018
(73) Proprietor: General Electric Company, Schenectady, NY 12345 (US)
(72) Inventor: BITTENCOURT, Jose Luiz, Niskayuna, NY New York (US); NEMOTO, Rafael Horschutz, Niskayuna, NY New York (US); BAIELI, Luis Francisco, Niskayuna, NY New York (US); MORITZ, Henrique, Niskayuna, NY New York (US)
(74) Representative: Novagraaf Group

(56) References cited:
- WO-A1-98/53182
- WO-A1-2016/053658
- CA-A1- 2 481 135
- US-A- 2 545 422
- US-A1- 2010 329 893

## Description

### BACKGROUND

Embodiments of the present invention relate generally to electric submersible pumps (ESPs), and more particularly to a motor protector of an electric submersible pump and an associated method thereof.

US 2010/0329893 A1 discloses a capsule housing an ESP with an expansion chamber.

Conventionally, subterranean areas of interest are accessed through a borehole. The borehole is surrounded by subterranean material such as sand that may migrate out of the borehole along with oil, gas, water, and/or other fluid generated from a well. An outermost casing is inserted in the borehole and held in position using cement in the space between an outer surface of the casing and surrounding earth. The fluid produced from the well flows to earth's surface through a production tubing. A variety of fluid lifting systems may be used to pump the fluid from the wellbore to earth's surface. For example, an electric submersible pump (ESP) having a pump, a motor, and a motor protector between the motor and the pump, is disposed in the wellbore for extracting the fluid. The motor protector is used to protect the motor from contamination by the extracted fluid. Further, the motor protector is also used to protect the motor from other contaminants such as particulate solids and other debris. The electric submersible pump disposed in wellbore is constrained by lateral space limitations.

Recently, ESPs have been employed on the sea floor for boosting subsea production. The low cost of ESPs compared to multiphase subsea pumps has driven increased deployment of ESPs horizontally (or slightly inclined) on skids that are laid on mudlines although ESPs are originally designed for downhole applications. The mudline ESP, also known as ESP on the skid, basically includes a conventional ESP installed in a capsule, which emulates the well production casing. Such use of ESPs facilitates to increase fluid production while reducing downtime during interventions. If an ESP located outside the production well, undergoes failure/repair, the operator is able to continue production, using backup artificial lift systems (e.g. gas lift systems). One drawback of using an ESP for such an application is larger length. Longer ESP strings demand bigger vessels during intervention operations and are more complex to handle.

### BRIEF DESCRIPTION

The present invention is defined in the accompanying claims.

### DRAWINGS

These and other features and aspects of embodiments of the present invention will become better understood when the following detailed description is read with reference to the accompanying drawings in which like characters represent like parts throughout the drawings, wherein:
FIG. 1 is a schematic illustration of a subsea production system having an electric submersible pump for extraction of a first fluid, for example, a wellbore fluid in accordance with an exemplary embodiment;
FIG. 2 is a side view of an electric submersible pump having a motor protector in accordance with an exemplary embodiment;
FIG. 3 is a schematic cross sectional view of a motor protector in accordance with an exemplary embodiment;
FIG. 4 is a schematic illustration of a labyrinth chamber of a motor protector in accordance with an exemplary embodiment;
FIG. 5 is a schematic illustration of a bag chamber of a motor protector not forming part of the scope of protection;
FIG. 6 is a schematic illustration of a metal bellow chamber of a motor protector not forming part of the scope of protection;
FIG. 7 is a perspective view of a motor protector having a plurality of seal chambers in series arrangement not forming part of the scope of protection;
FIG. 8 is a perspective view of a motor protector having a plurality of seal chambers in parallel arrangement not forming part of the scope of protection; and
FIG. 9 is a flow chart of a method for operating an electric submersible pump in accordance with an exemplary embodiment.

### DETAILED DESCRIPTION

As will be described in detail hereinafter, embodiments of a system and method for protecting an electric motor of an electric submersible pump (ESP) are disclosed. A motor protector of the electric submersible pump is used for protecting an electric motor of the ESP. The motor protector includes a housing, a rotatable shaft supported by a plurality of radial bearings inside the housing, and a thrust bearing coupled to the rotatable shaft. The motor protector further includes one or more shaft seals disposed along the rotatable shaft, between a pump unit and the electric motor. An isolation chamber is coupled substantially lateral to the housing and configured to control a pressure difference between an extracted first fluid, for example, a wellbore fluid and a second fluid, example, motor oil and thereby ensure control of the pressure exerted on the shaft seals.

The exemplary motor protector disclosed herein includes a suction chamber which is configured to perform combined functions performed by a motor protector and a pump intake of a conventional ESP. The exemplary motor protector has a reduced length and enables use of the ESP without encapsulation on the mudline. The shaft seals of the motor protector are used to isolate and protect the motor from the first fluid. The isolation chamber is configured to equalize the pressure between the first fluid and second fluid and thereby allow thermal expansion of the second fluid. The thrust bearings are configured to absorb shaft thrust generated by the pump unit. The rotatable shaft is configured to transmit a torque generated by the motor to the pump unit.

When ESPs are employed on the subsea mudline (*i.e.* outside the wellbore), outer diameter of the ESP is no longer a hard constraint. A feasible way to reduce the string length is to make more use of the available lateral space. In accordance with the disclosed exemplary embodiments, the isolation chamber is disposed lateral to the housing, thereby reducing length of the ESP. Short ESPs can significantly reduce operation costs, because such ESPs can be easily handled by smaller vessels.

The term 'subsea' refers to a region below the sea surface and includes sea-bed and wells drilled downwards from the sea-bed. Apparatus, components, and systems used for extracting wellbore fluids, installed on the seabed and in a wellbore, may be referred to as a 'subsea production system'.

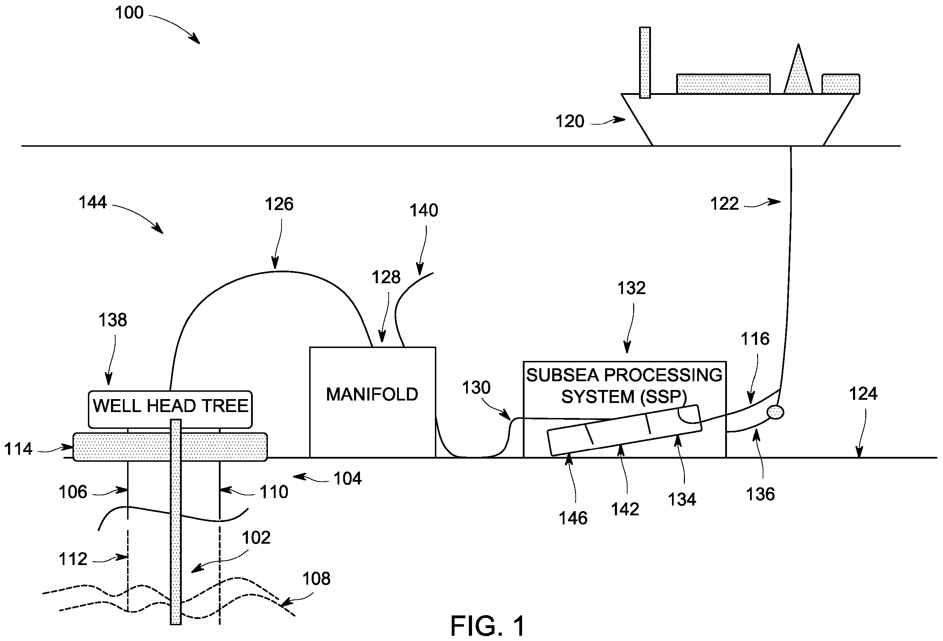

FIG. 1 is a diagrammatic illustration of a subsea production system 100 used for extraction of a first fluid, for example, a wellbore fluid in accordance with an exemplary embodiment. The subsea production system 100 includes a production unit 120 disposed on a vessel or a fixed platform or onshore. The production unit 120 is coupled to a riser system 122 and configured to receive the first fluid from subsea 144 through the riser system 122. The riser system 122 is coupled to a flow line 136 and configured to receive the first fluid from a flow line 136. Although the riser system 122 shown in the illustrated embodiment, is a single riser system, in other embodiments, a plurality of riser systems may be used. The flow line 136 is coupled to a subsea processing system 132 having the ESP 134 and configured to receive the wellbore fluid from the ESP 134. The subsea production system 100 further includes a manifold 128 coupled to a plurality wells through a plurality of respective well jumpers 126, 140. The well jumper 126 is used to transfer the first fluid from the well 104 to the manifold 128. For the ease of illustration, in the illustrated embodiment, only one well 104 is shown. The first fluid from another well is transferred to the manifold 128 through the well jumpers140. The manifold 128 is configured to control, distribute, and monitor flow of the first fluid. The subsea production system 100 further includes a well head tree 138 used to couple a well head 114 to the well jumper 126. The well head tree 138 is configured to control the flow of the first fluid from the well 104.

The well 104 includes a wellbore 106 drilled into a geological formation 108 having the first fluid, including but not limited to, petroleum and shale gas. The well 104 further includes a casing 110 disposed in the wellbore 106. The casing 110 includes a plurality of perforations 112 to enable flow of the first fluid from the geological formation 108 to the wellbore 106. A production tubing 102 is provided within the wellbore 106 to transport the first fluid outwards from the wellbore 106. A power cable 116, for example, an umbilical cable, is provided through the riser system 122 to supply electric power to a ESP 134 disposed on a seabed 124. In another embodiment, the power cable 116 may be disposed outside the riser system 122 and insulated from the subsea surroundings. In such an embodiment, the power cable 116 is connected to the production unit 120. The ESP 134 is used to pump the first fluid from the geological formation 108 via the wellbore 106. In some embodiments, other related equipment such as piping and valves may be coupled to the production unit 120 to distribute and control flow of the extracted first fluid from the geological formation 108 of the wellbore 106.

In one embodiment, the ESP 134 is disposed horizontally on the seabed 124 and directly in contact with sea water. In another embodiment, the ESP 134 is mounted at an inclined position depending on skid dimensions. The ESP 134 includes a motor protector 142 configured to protect an electric motor 146. The exemplary ESP 134 is disposed outside the wellbore 106 and has a shorter length.

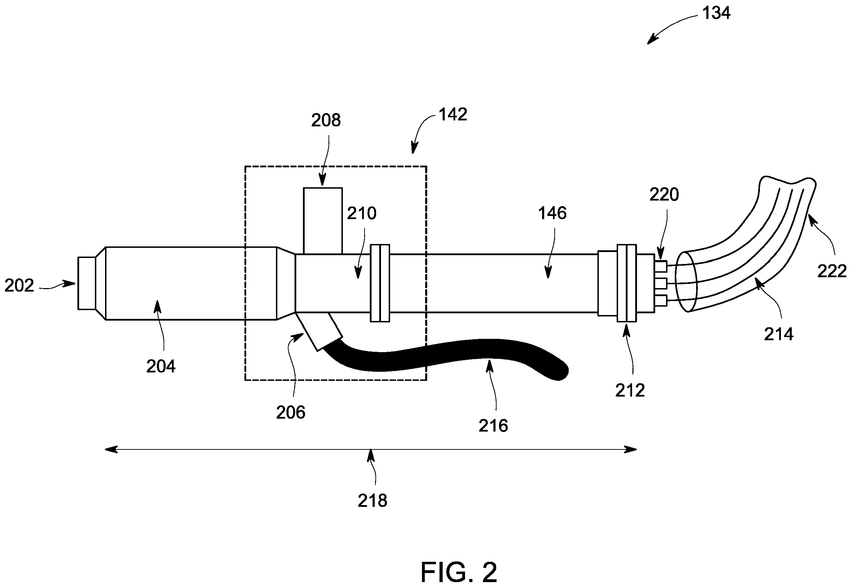

FIG. 2 is a side view of the ESP 134 having the motor protector 142 in accordance with an exemplary embodiment. In the illustrated embodiment, the ESP 134 includes a discharge head 202, a pump unit 204, the motor protector 142, the electric motor 146, and a pothead 212. The motor protector 142 is disposed between the electric motor 146 and the pump unit 204. The discharge head 202 connects the pump unit 204 to a production tubing of the riser system 122 shown in FIG. 1. In one embodiment, the discharge head may be connected to the flowline 136.

One end of the pump unit 204 is coupled to the discharge head 202. Another end of the pump unit 204 is coupled to an end of the motor protector 142. One end of the electric motor 146 is coupled to another end of the motor protector 142. The pothead 212 is coupled to another end of the motor 146. The pothead 212 is configured to withstand a difference between the second fluid pressure and external hydrostatic pressure generated due to depth of seawater. As a result, seawater incursion into the motor 146 and leakage of the second fluid to the surrounding sea water can be avoided. The pothead 212 further includes a plurality of metal contacts 220 for coupling a plurality of electric cables 214 to the motor 146. The plurality of electric cables 214 is encapsulated to provide protection from subsea water. In one embodiment, the plurality of electric cables 214 is encapsulated using a capsule 222. Further, the electric motor 146 is coupled to the pump unit 204 via a rotatable shaft (not shown in FIG. 2) of the motor protector 142. The pump unit 204 is driven by the electric motor 146. The motor protector 142 is configured to isolate the electric motor 146 from the pump unit 204, thereby ensuring protection of the electric motor 146 from the first fluid which usually has particulate solids and other debris from the geological formation.

In one embodiment, the pump unit 204 is a multistage centrifugal type pump unit. The pump unit 204 is configured to impose kinetic energy to the first fluid by centrifugal force and then convert the kinetic energy to a potential energy in the form of pressure. The pump unit 204 includes a plurality of impellers (not shown) configured to receive rotary motion generated by the electric motor 146 through the rotatable shaft.

In accordance with the embodiment of the present invention, the motor protector 142 is configured to protect the electric motor 146 by providing an isolation between the electric motor 146 and the pump unit 204. The motor protector 142 includes a housing 210, an isolation chamber 208 coupled substantially lateral to the housing 210, and a first inlet 206 coupled to the housing 210. Specifically, the isolation chamber 208 is coupled substantially orthogonal to the housing 210 disposed horizontally on the seabed. In certain embodiments where the housing 210 is disposed at an inclination from the seabed, the isolation chamber 208 is coupled to the housing 210 such that the isolation chamber 208 is disposed along a vertical direction substantially with respect to the seabed. The motor protector 142 is configured to equalize the pressure of first fluid in a suction chamber (not shown in FIG. 2) with the pressure of the second fluid of the electric motor 146. According to the invention, the isolation chamber 208 is a labyrinth chamber configured to equalize a pressure of second fluid with a pressure of the first fluid. In an example, not part of the scope of the claims, the isolation chamber 208 is a bag chamber configured to equalize a pressure of the second fluid with a pressure of the first fluid. In yet another example not part of the scope of the claims, the isolation chamber 208 is a metal bellow chamber configured to equalize a pressure of the second fluid with a pressure of the first fluid. In yet another example not part of the scope of the claims, a plurality of such chambers 208 may be used in series or parallel configurations to equalize a pressure of the second fluid with a pressure of the first fluid. The isolation chamber 208 is configured to accommodate variations in volume of the second fluid due to expansion and contraction. One end of the first inlet 206 is coupled to the housing 210 of the motor protector 142 and another end of the first inlet 206 is coupled to the flowline 130 (shown in FIG. 1).

In one embodiment, the electric motor 146 is driven by a high voltage alternating current source. For example, the high voltage source may be a 5kV voltage source. The electric motor 146 may be operated at a temperature of 260 degree Celsius ( 500 degree Fahrenheit), for example. In certain embodiments, the electric motor 146 may be operated at a pressure of about 34474 kPa (5000 psi) at an operating depth of 4572 m (15,000 feet). feet. In one embodiment, the electric motor 146 is two-pole, squirrel cage induction electric motor. In another embodiment, the electric motor 146 is a permanent magnet synchronous motor. The sea water surrounding the ESP 134 is used for cooling the electric motor 146.

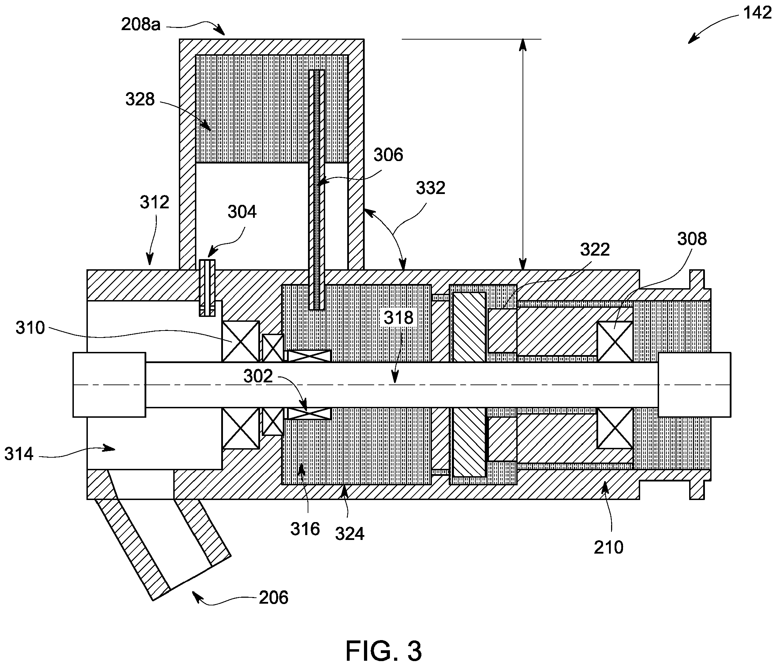

FIG. 3 is a schematic cross section view of the motor protector 142 in accordance with an exemplary embodiment. The motor protector 142 includes the housing 210 and a rotatable shaft 318 disposed within the housing 210. A suction chamber 312 within the housing 210, is used for storing the first fluid 314. Further, a container 324 disposed within the housing 210, is used for storing the second fluid 316. The suction chamber 312 is configured to receive the first fluid 314 from the wellbore through the flowline 216. The first fluid 314 is transferred from the suction chamber 312 to a first stage of the pump unit. The container 324 is configured to receive the second fluid 316 from the motor. A plurality of radial bearings 308, 310 is coupled to the rotatable shaft 318 and used for supporting the rotatable shaft 318 against the housing 210. Further, a thrust bearing 322 is coupled to the rotatable shaft 318 and used for supporting the rotatable shaft 318 against the housing 210. A shaft seal 302 is coupled to the rotatable shaft 318 and configured to prevent fluidic communication between the suction chamber 312 having the first fluid 314 and the container 324 having the second fluid 316.

A labyrinth chamber 208a is coupled substantially orthogonal to the housing 210. According to the invention, the first fluid 314 has a higher density compared to the second fluid 316. The labyrinth chamber 208a is configured to separate the first fluid 314 from the second fluid 316 under influence of gravity. The first fluid 314 contacts the second fluid 316 at an interface layer 328. The labyrinth chamber 208a facilitates to equalize pressure between the first fluid 314 and the second fluid 316 to accommodate expansion and contraction of the second fluid 316.

The first inlet 206 is coupled to the housing 210 for allowing flow of the first fluid 314 to the suction chamber 312. The motor protector 142 further includes a second inlet 304 extending from the suction chamber 312 to the labyrinth chamber 208a, for allowing flow of the first fluid 314 from the suction chamber 312 to the labyrinth chamber 208a. The motor protector 142 further includes a third inlet 306 extending from the container 324 to the labyrinth chamber 208a, for allowing flow of the second fluid 316 from the container 324 to the labyrinth chamber 208a. In the illustrated embodiment, the second inlet 304 and the third inlet 306 extend inward from a bottom side of the labyrinth chamber 208a. In another embodiment, the second fluid 316 may include, but not limited to, mineral oil, synthetic oil such as poly-alpha-olefin, and the like.

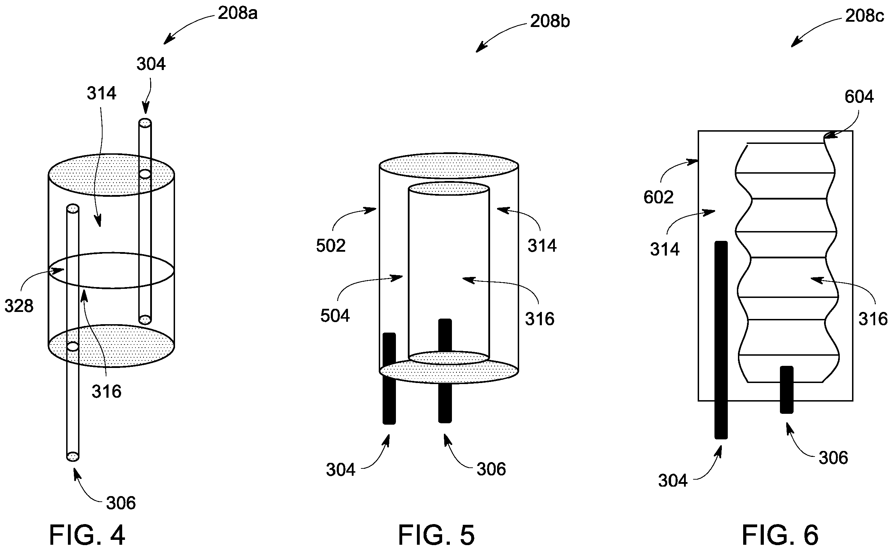

The radial bearing 310 is referred to as a pump side radial bearing and the radial bearing 308 is referred to as the motor side radial bearing. In one embodiment, the radial bearing 308 includes a rolling-element bearing. The thrust bearing 322 is configured to limit transmission of a thrust load from the pump unit to the motor during operation of the ESP. FIG. 4 is a schematic illustration of a labyrinth chamber 208a of a motor protector in accordance with another exemplary embodiment. The labyrinth chamber 208a is configured to receive the first fluid 314 from the second inlet 304 and the second fluid 316 from the third inlet 306. In the illustrated embodiment, the second inlet 304 extends inwards from a top side of the labyrinth chamber 208a and the third inlet 306 extend inwards from the bottom side of the labyrinth chamber 208a. In certain other embodiments, the second inlet 304 and the third inlet 306 extend inward from sides of the labyrinth chamber 208a. All such permutations and combinations of arrangement of the second and third inlets 304, 306 are envisioned. In such embodiments, the second inlet 304 permits flow of a denser fluid to the bottom portion of the labyrinth chamber 208a and the third inlet 306 permits flow of a lighter fluid to the top portion of the labyrinth chamber 208a.

FIG. 5 is a schematic illustration of a bag chamber 208b of a motor protector.

The bag chamber 208b includes a first bag 502 and a second bag 504 coupled to the second inlet 304 and the third inlet 306 respectively. The first bag 502 and the second bag 504 may be made of different materials depending on the application. In one example, the first bag 502 serves as a housing made of a rigid material which is not deformable due to fluid pressure. The second bag 504 may be made of an elastomer. In some examples, the second bag 504 may be made of carbon dioxide and hydrogen sulfide resistant elastomers. In the illustrated example, the first bag 502 is used to contain the first fluid 314 and the second bag 504 is used to contain the second fluid 316. In one example, the bag chamber 208b includes only one bag disposed in a fixed enclosure. In an example, where only one bag is used, the first fluid 314 is accumulated outside the bag and the second fluid 316 is accumulated inside the bag.

FIG. 6 is a schematic illustration of a metal bellow chamber 208c of a motor protector. The metal bellow chamber 208c includes a rigid housing 602 and a bellow housing 604 disposed within the rigid housing 602. The bellow housing 604 is a flexible vessel made up of a plurality of metals and alloys such as, but not limited to, brass, titanium and nickel. In one example, the bellow housing 604 is cylindrical shaped. The bellow housing 604 is coupled to the third inlet 306 and used to contain the second fluid 316. The rigid housing 602 is coupled to the second inlet 304 and used to contain the first fluid 314.

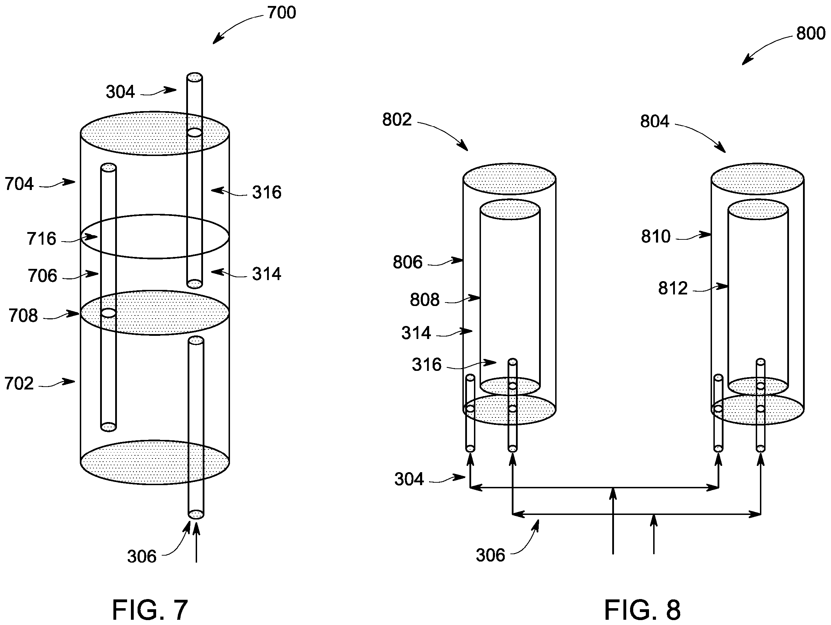

FIG. 7 is a perspective view of a motor protector 700.

In the illustrated example, the motor protector 700 includes a first labyrinth chamber 702 and a second labyrinth chamber 704 connected to each other in series. In one example, the first labyrinth chamber 702 and the second labyrinth chamber 704 are separated by a barrier 708. The first labyrinth chamber 702 is coupled to the third inlet 306 and configured to receive the second fluid 316. The second labyrinth chamber 704 is coupled to the second inlet 304 and configured to receive the first fluid 314. The first labyrinth chamber 702 and the second labyrinth chamber 704 are in fluidic communication with each other through a tubular path 706. The tubular path 706 is used to introduce the second fluid 316 from the first labyrinth chamber 702 into the second labyrinth chamber 704. The second inlet 304 introduces the first fluid 314 from the suction chamber into the second labyrinth chamber 704.

The first fluid 314 from the second labyrinth chamber 704 and the second fluid 316 from the second labyrinth chamber 704 contact each other to form an interface 716. When the second fluid 316 contracts, some portion of the second fluid 316 above the interface 716 recedes to the first labyrinth chamber 702 through the tubular path 706. Remaining portion of the second fluid 316 in the second labyrinth chamber 704 remains in contact with the first fluid 314. During normal operation, the second fluid 316 expands due to increase in temperature. The expanded second fluid 316 is allowed to enter the first labyrinth chamber 702. During shutdown operation, the second fluid 316 shrinks due to cooling and thereby, the second fluid 316 is withdrawn from the first labyrinth chamber 702.

FIG. 8 is a perspective view of a motor protector 800.

In the illustrated example, the motor protector 800 includes a first bag 802 and a second bag 804 arranged in a parallel configuration. The first bag 802 includes an outer housing 806 configured to receive the first fluid 314 via the second inlet 304 and an inner bag 808 configured to receive the second fluid 316 via the third inlet 306. The second bag 804 includes an outer housing 810 configured to receive the first fluid 314 via the second inlet 304 and an inner bag 812 configured to receive the second fluid 316 via the third inlet 306. The parallel configuration of the first bag 802 and the second bag 804 provides sufficient volume for allowing expansion of the second fluid 316. In alternative examples, a motor protector having the bag chamber 208b disposed in parallel with the labyrinth chamber 208a and/or the metal bellow chamber 208c.

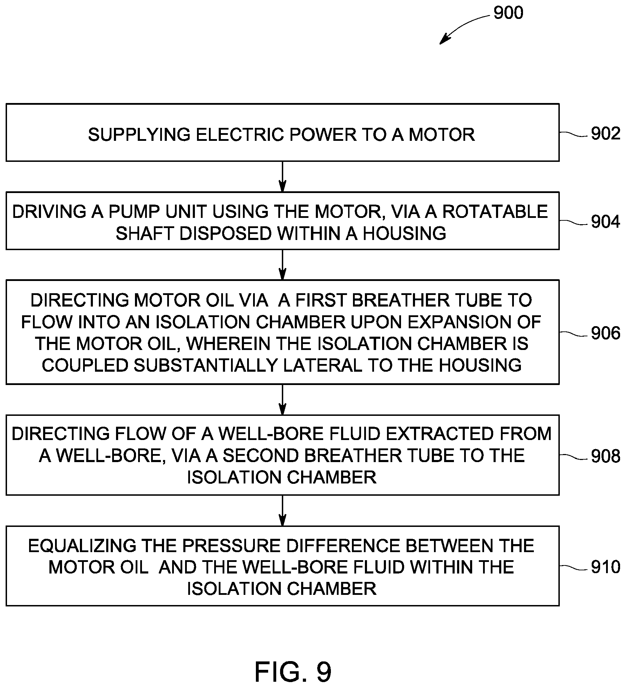

FIG. 9 is a flow chart of a method 900 for operating an ESP disposed on a subsea floor in accordance with an exemplary embodiment. The method 900 includes supplying electric power to a motor at step 902 and driving a pump unit using the motor via a rotatable shaft disposed within a housing of a motor protector at step 904. The pump unit operates to extract a first fluid, for example, a wellbore fluid. The motor is lubricated by a second fluid, for example, motor oil.

In step 906, the method further includes directing flow of the second fluid into the isolation chamber upon expansion of the second fluid. Similarly, the method 900 includes, at step 908, directing flow of the first fluid extracted from the wellbore, to the isolation chamber. The method 900 also includes separating the second fluid from the first fluid within the isolation chamber at step 910. A labyrinth chamber is used as the isolation chamber, the separation of the second fluid from the first fluid is achieved under influence of gravity. In one embodiment, the method 900 further includes removing the second fluid from the isolation chamber via the housing upon contraction of the second fluid. As a result, a pressure difference between the first fluid and the second fluid is equalized. In another embodiment, the method 900 also includes preventing contact of the first fluid with the motor, along the rotatable shaft, using a shaft seal coupled to the rotatable shaft. In one embodiment, the method 900 includes limiting transmission of a thrust load from the pump unit to the motor, using a thrust bearing coupled to the rotatable shaft. In accordance with the embodiments discussed herein, the ESP has a shorter length because the isolation chamber is disposed in a lateral position.

## Claims

1. A motor protector (142) for an electric submersible pump comprising:
a housing (210);
a rotatable shaft (318) disposed within the housing (210);
a plurality of radial bearings (308,310) coupled to the rotatable shaft (318), for supporting the rotatable shaft (318) against the housing (210);
a thrust bearing (322) coupled to the rotatable shaft (318), for supporting the rotatable shaft (318) against the housing (210);
a shaft seal (302) coupled to the rotatable shaft (318), and configured to seal a first portion from a second portion of the housing; and
an isolation chamber (208), attached substantially lateral to the housing (210) and configured to separate a first fluid (314) and a second fluid (316) received via the housing under influence of gravity, wherein the first fluid (314) has a higher density compared to the second fluid (316), wherein
the isolation chamber (208) is coupled substantially orthogonal to the housing (210) when the housing (210) is disposed horizontally on a seabed or the isolation chamber (208) is coupled to the housing (210) such that the isolation chamber (208) is disposed along a vertical direction substantially with respect to the seabed when the housing (210) is disposed at an inclination from the seabed;
a first inlet (206) coupled to the housing (210), for allowing a flow of the first fluid (314) into the housing (210);
a second inlet (304) extending from the housing (210) to the isolation chamber (208), for allowing the flow of the first fluid (314) from the housing (210) to the isolation chamber (208), the second inlet (304) having a discharge in a lower portion of the isolation chamber (208); and
a third inlet (306) extending from the housing (210) to the isolation chamber (208), for allowing the flow of the second fluid (316) from the housing (210) to the isolation chamber (208), the third inlet (306) having a discharge in an upper portion of the isolation chamber (208) and wherein the second fluid (316) contacts the first fluid (314) at an interface layer (328) within the isolation chamber (208) between the discharge of the third inlet (306) and the discharge of the second inlet (304),
wherein the isolation chamber comprises one labyrinth chamber (208a).

2. The motor protector of any preceding claim, wherein the plurality of radial bearings (308, 310) comprises a rolling-element bearing.

3. An electric submersible pump (134) comprising:
a motor protector (142) according to any preceding claim;
a motor (146) coupled to a first portion of the rotatable shaft (318); and
a pump unit (204) coupled to a second portion of the rotatable shaft (318), wherein the isolation chamber (208) is configured to separate a wellbore fluid extracted form a wellbore, from motor oil received via the housing (210).

4. A method for operating an electric submersible pump (134) disposed on a subsea floor, the method comprising:
supplying electric power to a motor (146) lubricated by motor oil;
driving a pump unit (204) using the motor (146), via a rotatable shaft (318) disposed within a housing (210);
directing a flow of motor oil via the housing (210) into an isolation chamber (208) upon expansion of the motor oil, wherein the isolation chamber (208) is attached substantially lateral to the housing (210), and wherein the isolation chamber (208) is coupled substantially orthogonal to the housing (210) when the housing (210) is disposed horizontally on a seabed or the isolation chamber (208) is coupled to the housing (210) such that the isolation chamber (208) is disposed along a vertical direction substantially with respect to the seabed when the housing (210) is disposed at an inclination from the seabed;
directing a flow of a wellbore fluid extracted from a wellbore, via the housing (210) to the isolation chamber (208), wherein the wellbore fluid has a higher density than the motor oil; and
separating by gravity the motor oil from the wellbore fluid within the isolation chamber (208), the isolation chamber comprising one labyrinth chamber (208a).

5. The method of claim 4, further comprising removing the motor oil from the isolation chamber (208) via the housing (210) upon contraction of the motor oil.

6. The method of claim 4 or 5, further comprising preventing contact of the wellbore fluid with the motor (146), using a shaft seal coupled to the rotatable shaft (318).

7. The method of any of claims 4 to 6, further comprising compensating a pressure difference between the wellbore fluid and the motor oil by directing the wellbore fluid and the motor oil to the isolation chamber (208) via the housing (210).

8. The method of any of claims 4 to 7, further comprising limiting transmission of a thrust load from the pump unit (204) to the motor, using a thrust bearing (322) coupled to the rotatable shaft (318).

## Patentansprüche

1. Motorschutz (142) für eine elektrische Tauchpumpe, umfassend:
ein Gehäuse (210);
eine drehbare Welle (318), die innerhalb des Gehäuses (210) angeordnet ist;
eine Vielzahl von Radiallagern (308,310), die mit der drehbaren Welle (318) gekoppelt sind, um die drehbare Welle (318) gegen das Gehäuse (210) abzustützen;
ein Axiallager (322), das mit der drehbaren Welle (318) gekoppelt ist, um die drehbare Welle (318) gegen das Gehäuse (210) abzustützen;
eine Wellendichtung (302), die mit der drehbaren Welle (318) gekoppelt ist und so konfiguriert ist, dass sie einen ersten Abschnitt von einem zweiten Abschnitt des Gehäuses abdichtet; und
eine Isolationskammer (208), die im Wesentlichen seitlich an dem Gehäuse (210) angebracht und so konfiguriert ist, dass sie ein erstes Fluid (314) und ein zweites Fluid (316), das durch das Gehäuse aufgenommen wird, unter dem Einfluss der Schwerkraft trennt, wobei das erste Fluid (314) eine höhere Dichte als das zweite Fluid (316) aufweist, wobei
die Isolationskammer (208) im Wesentlichen orthogonal zu dem Gehäuse (210) gekoppelt ist, wenn das Gehäuse (210) horizontal auf einem Meeresboden angeordnet ist, oder die Isolationskammer (208) mit dem Gehäuse (210) so gekoppelt ist, dass die Isolationskammer (208) entlang einer vertikalen Richtung im Wesentlichen in Bezug auf den Meeresboden angeordnet ist, wenn das Gehäuse (210) in einer Neigung zum Meeresboden angeordnet ist;
einen ersten Einlass (206), der mit dem Gehäuse (210) gekoppelt ist, um einen Durchfluss des ersten Fluids (314) in das Gehäuse (210) zu ermöglichen;
einen zweiten Einlass (304), der sich von dem Gehäuse (210) zu der Isolationskammer (208) erstreckt, um den Durchfluss des ersten Fluids (314) von dem Gehäuse (210) zu der Isolationskammer (208) zu ermöglichen, wobei der zweite Einlass (304) einen Auslass in einem unteren Abschnitt der Isolationskammer (208) aufweist; und
einen dritten Einlass (306), der sich von dem Gehäuse (210) zu der Isolationskammer (208) erstreckt, um den Durchfluss des zweiten Fluids (316) von dem Gehäuse (210) zu der Isolationskammer (208) zu ermöglichen, wobei der dritte Einlass (306) einen Auslass in einem oberen Abschnitt der Isolationskammer (208) aufweist und wobei das zweite Fluid (316) das erste Fluid (314) an einer Schnittstellenschicht (328) innerhalb der Isolationskammer (208) zwischen dem Auslass des dritten Einlasses (306) und dem Auslass des zweiten Einlasses (304) berührt.
, wobei die Isolationskammer eine Labyrinthkammer (208a) umfasst.

2. Motorschutz nach einem der vorstehenden Ansprüche, wobei die Vielzahl der Radiallager (308, 310) ein Wälzlager umfasst.

3. Elektrische Tauchpumpe (134), umfassend:
einen Motorschutz (142) nach einem der vorstehenden Ansprüche;
einen Motor (146), der mit einem ersten Abschnitt der drehbaren Welle (318) gekoppelt ist; und
eine Pumpeneinheit (204), die mit einem zweiten Abschnitt der drehbaren Welle (318) gekoppelt ist, wobei die Isolationskammer (208) so konfiguriert ist, dass sie ein aus einem Bohrloch gefördertes Bohrlochfluid von über das Gehäuse (210) aufgenommenem Motoröl trennt.

4. Verfahren zum Betreiben einer elektrischen Tauchpumpe (134), die auf einem Unterwasserboden angeordnet ist, wobei das Verfahren umfasst:
Zuführen von elektrischer Energie zu einem Motor (146), der durch Motoröl geschmiert wird;
Antreiben einer Pumpeneinheit (204) unter Verwendung des Motors (146) über eine drehbare Welle (318), die in einem Gehäuse (210) angeordnet ist;
Leiten eines Durchflusses von Motoröl über das Gehäuse (210) in eine Isolationskammer (208) bei Expansion des Motoröls, wobei die Isolationskammer (208) im Wesentlichen seitlich an dem Gehäuse (210) angebracht ist, und wobei die Isolationskammer (208) im Wesentlichen orthogonal zu dem Gehäuse (210) gekoppelt ist, wenn das Gehäuse (210) horizontal auf einem Meeresboden angeordnet ist, oder die Isolationskammer (208) mit dem Gehäuse (210) so gekoppelt ist, dass die Isolationskammer (208) entlang einer vertikalen Richtung im Wesentlichen in Bezug auf den Meeresboden angeordnet ist, wenn das Gehäuse (210) in einer Neigung zum Meeresboden angeordnet ist;
Leiten eines Durchflusses eines aus einem Bohrloch geförderten Bohrlochfluids über das Gehäuse (210) zu der Isolationskammer (208), wobei das Bohrlochfluid eine höhere Dichte als das Motoröl aufweist; und
Trennen des Motoröls von dem Bohrlochfluid innerhalb der Isolationskammer (208) durch Schwerkraft, wobei die Isolationskammer eine Labyrinthkammer (208a) umfasst.

5. Verfahren nach Anspruch 4, ferner umfassend das Entfernen des Motoröls aus der Isolationskammer (208) über das Gehäuse (210) beim Zusammenziehen des Motoröls.

6. Verfahren nach Anspruch 4 oder 5, ferner umfassend das Verhindern des Berührens des Motors (146) mit dem Bohrlochfluid unter Verwendung einer Wellendichtung, die mit der drehbaren Welle (318) gekoppelt ist.

7. Verfahren nach einem der Ansprüche 4 bis 6, ferner umfassend den Ausgleich einer Druckdifferenz zwischen dem Bohrlochfluid und dem Motoröl, indem das Bohrlochfluid und das Motoröl über das Gehäuse (210) in die Isolationskammer (208) geleitet werden.

8. Verfahren nach einem der Ansprüche 4 bis 7, ferner umfassend das Begrenzen der Übertragung einer Axiallast von der Pumpeneinheit (204) auf den Motor unter Verwendung eines mit der drehbaren Welle (318) gekoppelten Axiallagers (322).

## Revendications

1. Protecteur de moteur (142) pour une pompe électrique submersible comprenant :
un boîtier (210) ;
un arbre rotatif (318) disposé au sein du boîtier (210) ;
une pluralité de paliers radiaux (308, 310) couplés à l'arbre rotatif (318), pour le soutien de l'arbre rotatif (318) contre le boîtier (210) ;
un palier de butée (322) couplé à l'arbre rotatif (318), pour le soutien de l'arbre rotatif (318) contre le boîtier (210) ;
un joint d'arbre (302) couplé à l'arbre rotatif (318), et configuré pour jointer une première partie d'une seconde partie du boîtier ; et
une chambre d'isolation (208), fixée sensiblement latéralement au boîtier (210) et configurée pour séparer un premier fluide (314) et un second fluide (316) reçus par le biais du boîtier sous l'influence de la gravité, dans lequel le premier fluide (314) présente une densité supérieure par comparaison avec le second fluide (316), dans lequel
la chambre d'isolation (208) est couplée sensiblement orthogonalement au boîtier (210) lorsque le boîtier (210) est disposé horizontalement sur un fond marin ou la chambre d'isolation (208) est couplée au boîtier (210) de telle sorte que la chambre d'isolation (208) est disposée le long d'une direction verticale sensiblement par rapport au fond marin lorsque le boîtier (210) est disposé au niveau d'une inclinaison du fond marin ;
une première entrée (206) couplée au boîtier (210), pour l'autorisation d'un écoulement du premier fluide (314) dans le boîtier (210) ;
une deuxième entrée (304) s'étendant du boîtier (210) à la chambre d'isolation (208), pour l'autorisation de l'écoulement du premier fluide (314) du boîtier (210) à la chambre d'isolation (208), la deuxième entrée (304) présentant une évacuation dans une partie inférieure de la chambre d'isolation (208) ; et
une troisième entrée (306) s'étendant du boîtier (210) à la chambre d'isolation (208), pour l'autorisation de l'écoulement du second fluide (316) du boîtier (210) à la chambre d'isolation (208), la troisième entrée (306) présentant une évacuation dans une partie supérieure de la chambre d'isolation (208) et dans lequel le second fluide (316) vient en contact avec le premier fluide (314) au niveau d'une couche d'interface (328) au sein de la chambre d'isolation (208) entre l'évacuation de la troisième entrée (306) et l'évacuation de la deuxième entrée (304)., dans lequel la chambre d'isolation comprend une chambre à labyrinthe (208a).

2. Protecteur de moteur selon l'une quelconque revendication précédente, dans lequel la pluralité de paliers radiaux (308, 310) comprend un palier à élément roulant.

3. Pompe électrique submersible (134) comprenant :
un protecteur de moteur (142) selon l'une quelconque revendication précédente ;
un moteur (146) couplé à une première partie de l'arbre rotatif (318) ; et
une unité de pompe (204) couplée à une seconde partie de l'arbre rotatif (318), dans laquelle la chambre d'isolation (208) est configurée pour séparer un fluide de puits de forage extrait d'un puits de forage, de l'huile moteur reçue par le biais du boîtier (210).

4. Procédé de fonctionnement d'une pompe électrique submersible (134) disposée sur un sol sous-marin, le procédé comprenant :
la fourniture d'énergie électrique à un moteur (146) lubrifié par de l'huile moteur ;
l'entraînement d'une unité de pompe (204) en utilisant le moteur (146), par le biais d'un arbre rotatif (318) disposé au sein d'un boîtier (210) ;
la direction d'un écoulement d'huile moteur par le biais du boîtier (210) dans une chambre d'isolation (208) lors de l'expansion de l'huile moteur, dans lequel la chambre d'isolation (208) est fixée sensiblement latéralement au boîtier (210), et dans lequel la chambre d'isolation (208) est couplée sensiblement orthogonalement au boîtier (210) lorsque le boîtier (210) est disposé horizontalement sur un fond marin ou la chambre d'isolation (208) est couplée au boîtier (210) de telle sorte que la chambre d'isolation (208) est disposée le long d'une direction verticale sensiblement par rapport au fond marin lorsque le boîtier (210) est disposé au niveau d'une inclinaison du fond marin ;
la direction d'un écoulement d'un fluide de puits de forage extrait d'un puits de forage, par le biais du boîtier (210) vers la chambre d'isolation (208), dans lequel le fluide de puits de forage présente une densité supérieure à l'huile moteur ; et
la séparation par gravité de l'huile moteur du fluide de puits de forage au sein de la chambre d'isolation (208), la chambre d'isolation comprenant une chambre à labyrinthe (208a).

5. Procédé selon la revendication 4, comprenant en outre le retrait de l'huile moteur de la chambre d'isolation (208) par le biais du boîtier (210) lors de la contraction de l'huile moteur.

6. Procédé selon la revendication 4 ou 5, comprenant en outre la prévention du contact du fluide de puits de forage avec le moteur (146), en utilisant un joint d'arbre couplé à l'arbre rotatif (318).

7. Procédé selon l'une quelconque des revendications 4 à 6, comprenant en outre la compensation d'une différence de pression entre le fluide de puits de forage et l'huile moteur en dirigeant le fluide de puits de forage et l'huile moteur vers la chambre d'isolation (208) par le biais du boîtier (210).

8. Procédé selon l'une quelconque des revendications 4 à 7, comprenant en outre la limitation de la transmission d'une charge de butée de l'unité de pompe (204) au moteur, en utilisant un palier de butée (322) couplé à l'arbre rotatif (318).
